# EUROPÄISCHE PATENTSCHRIFT

(11) **EP 2 831 198 B1**
(45) Veröffentlichungstag und Bekanntmachung des Hinweises auf die Patenterteilung: **08.08.2018**
(21) Anmeldenummer: 13720776.7
(22) Anmeldetag: 26.03.2013
(51) Int. Cl.: C10G 1/10, B01J 8/08, B01J 8/10, C10G 9/00

(54) **VORRICHTUNG UND VERFAHREN ZUR KATALYTISCHEN DEPOLYMERISATION VON KOHLENWASSERSTOFF ENTHALTENDEM MATERIAL**
DEVICE AND METHOD FOR THE CATALYTIC DEPOLYMERISATION OF MATERIAL CONTAINING HYDROCARBON
DISPOSITIF ET PROCÉDÉ DE DÉPOLYMÉRISATION CATALYTIQUE D'UNE MATIÈRE CONTENANT UN HYDROCARBURE

(30) Priorität: 26.03.2012 DE 102012005942; 31.05.2012 DE 102012010763
(43) Veröffentlichungstag der Anmeldung: 04.02.2015
(73) Patentinhaber: Trautmann, Axel, 51588 Nümbrecht (DE)
(72) Erfinder: Trautmann, Axel, 51588 Nümbrecht (DE)
(74) Vertreter: Rebbereh, Cornelia
(86) Internationale Anmeldenummer: PCT/EP2013/000904
(87) Internationale Veröffentlichungsnummer: WO 2013/143685

(56) Entgegenhaltungen:
- CN-C- 100 343 367
- DE-A1-102008 047 563
- US-A- 4 007 016
- US-A- 5 899 566
- US-A1- 2005 115 871
- US-A1- 2010 329 938

## Beschreibung

Die Erfindung betrifft eine Vorrichtung und ein Verfahren zur katalytischen Depolymerisation von Kohlenwasserstoff enthaltendem Material, enthaltend zumindest einen mit dem Material befüllbaren Behälter.

Verfahren und Vorrichtungen zur katalytischen Depolymerisation sind bekannt. Bei der katalytischen Depolymerisation werden Kohlenwasserstoff enthaltende Materialien gespalten und hierdurch das Gewinnen von insbesondere Dieselöl ermöglicht. Katalysatoren dienen als eine Art Ionenaustauscher und cracken unterschiedlich lange Kohlenwasserstoffketten.

Beispielsweise offenbart die EP 1 538 191 A1 eine Vorrichtung und ein Verfahren zum Erzeugen von Dieselöl aus kohlenwasserstoffhaltigen Reststoffen in einem Ölkreislauf mit Feststoffabscheider und Produktdestillation für das Dieselprodukt durch Energieeintrag mit Pumpen und gegenläufigen Rührwerken unter Verwendung von voll durchkristallisierten Katalysatoren aus Kalium-, Natrium-, Calcium- und Magnesium-Aluminium- Silikaten, wobei alle Oberflächen durch die Rührwerke kontinuierlich gereinigt werden. Die für die Durchführung des Verfahrens verwendete Vorrichtung enthält eine Hochleistungspumpe, einen gegenläufigen Rührer, eine Drosselregelungsklappe, einen Abscheidezyklon im Kreislauf und Abscheidebehälter mit beheizter Austragsschnecke sowie eine Destillationsanlage an den beiden Ausgängen der Vorrichtung. Die in diesem Stand der Technik offenbarte Vorrichtung ist somit recht komplex aufgebaut.

Eine weitere komplex aufgebaute Vorrichtung, die allerdings auf Pyrolysebasis arbeitet, ist aus der WO 2012/016633 A2 bekannt, bei der in einer Anlage zum Erzeugen von Treibstoffen aus Biomasse-Kunststoff-Gemischen ein Silo für Biomasse, eines für Kunststoffe, aus denen kommend Biomasse und Kunststoffe in einer Heizschnecke für Biomasse und einer für Kunststoffe erwärmt und getrocknet bzw. verflüssigt und geschmolzen werden, bevor sie einem Disperger zugeführt werden, in dem sie bei 300-400 °C dispergiert und gleichzeitig unter Bilden einer Suspension erwärmt werden. Die Suspension wird sofort in einen Reaktor überführt. Die Anlage umfasst mehrere Reaktoren, ebenso wie einen Vakuumverdampfer, Kondensatoren, einen Phasentrenner, Separatoren, eine Rektifikationskolonne und einen Gasmotor oder eine Gasturbine. Auch diese Anlage ist somit ersichtlich recht komplex aufgebaut.

Der vorliegenden Erfindung liegt daher die Aufgabe zugrunde, ein noch effektiveres Verfahren zur katalytischen Depolymerisation von Kohlenwasserstoff enthaltendem Material sowie eine kompaktere Vorrichtung zur Durchführung dieses Verfahrens zur Verfügung zu stellen, wobei insbesondere ein höherer Wirkungsgrad als mit dem in der EP 1 538 191 A1 offenbarten Verfahren ermöglicht werden soll.

Die Aufgabe wird für eine Vorrichtung nach dem Oberbegriff des Anspruchs 1 dadurch gelöst, dass in dem Behälter zumindest eine Fördereinrichtung mit Einrichtung zum Wärmeeintrag in das Innere der Fördereinrichtung und mit zumindest einer Einlassöffnung und zumindest einer hiervon beabstandeten Auslassöffnung vorgesehen ist, wobei die Einlassöffnung im unteren Bereich des Behälters die Auslassöffnung im oberen Bereich des Behälters angeordnet oder anordbar ist zum Zirkulieren und Erwärmen des Materials auf Verdampfungstemperatur, wobei die Fördereinrichtung Förderelemente zum Befördern des Materials von der zumindest einen Einlassöffnung zu der zumindest einen Auslassöffnung und Elemente umfasst, die sich durch Wirkung von Fliehkraft an der Innenseite der Wandung der Fördereinrichtung anlegen und diese reinigen zum Optimalhalten des Wärmeübergangs von der Einrichtung zum Wärmeeintrag in das durch die Fördereinrichtung strömende Material durch die Wandung der Fördereinrichtung hindurch in das dort hindurch geförderte Material, wobei die Einrichtung zum Wärmeeintrag eine auf Induktionsbasis arbeitende Einrichtung ist. Für ein Verfahren nach dem Oberbegriff des Anspruchs 9 wird die Aufgabe dadurch gelöst, dass zumindest ein Trägermaterial in den Behälter eingefült wird, das Material in das Trägermedium eingebracht wird, das Trägermedium mit dem Material in eine Drehbewegung versetzt wird, das Material durch eine Fördereinrichtung mit Einrichtung zum Wärmeeintrag hindurch zirkuliert und dabei so lange erwärmt wird, bis es auf Verdampfungstemperatur gebracht ist, wobei das Material in der Fördereinrichtung durch einen Induktionserwärmer erwärmt wird, und wobei die Fördereinrichtung Förderelemente zum Befördern des Materials von der zumindest einen Einlassöffnung zu der zumindest einen Auslassöffnung und Elemente umfasst, die sich durch Wirkung von Fliehkraft an der Innenseite der Wandung der Fördereinrichtung anlegen und diese reinigen, um den Wärmeübergang von der Einrichtung zum Wärmeeintrag in das durch die Fördereinrichtung strömende Material durch die Wandung der Fördereinrichtung hindurch in das dort hindurch geförderte Material optimal zu halten, der aufsteigende Dampf kondensiert und die Destillatbestandteile als Produkte abgeführt werden. Weiterbildungen der Erfindung sind in den abhängigen Ansprüchen definiert.

Dadurch werden eine Vorrichtung und ein Verfahren zur katalytischen Depolymerisation von Kohlenwasserstoff enthaltendem Material, insbesondere von Reststoffen, wie Altöl, einem Gemisch aus Altöl und anderem Material, Cellulose, Klärschlamm, Kunststoffen, etc. vorgesehen, mittels dessen bzw. mittels derer durch das Zirkulieren und zugleich Erwärmen des zu depolymerisierenden Materials in der Fördereinrichtung bzw. durch diese hindurch ein schneller Wärmeeintrag in dieses zu depolymerisierende Material und somit ein schnelles Verdampfen möglich ist und somit ein hoher Wirkungsgrad. Die Einrichtung zum Wärmeeintrag ist eine auf Induktionsbasis arbeitende Einrichtung, insbesondere ein Mittelfrequenzinduktor. Diese Einrichtung wird vorteilhaft zwischen der Einlassöffnung und der Auslassöffnung der Fördereinrichtung auf deren Außenseite angeordnet, so dass ein Wärmeeintrag in das Innere der Fördereinrichtung und somit ein Erwärmen des dort hindurch geförderten Materials möglich ist. Die Erwärmung erfolgt bis zu Temperaturen von über etwa 300°C, vorteilhaft unter etwa 390°C, da in diesem Temperaturbereich eine katalytische Molekularverkürzung erfolgt. Als Katalysator können bei dem Verfahren beispielsweise Natrium-Aluminium-Silikate verwendet werden, die als eine Art Ionenaustauscher arbeiten. Diese Katalysatoren cracken unterschiedlich lange Kohlenwasserstoffketten. Um Energieverluste so weit wie möglich zu vermeiden und den Energieeintrag zum Erwärmen des Materials so gering wie möglich halten zu können, erweist es sich als vorteilhaft, den Behälter als einen mit zumindest einer wärmedämmenden Isolierschicht versehenen Hochtemperaturbehälter auszubilden. Weiter vorteilhaft werden zumindest die Komponenten, die zur Zuführung des Materials sowie zu dessen Erwärmung und Umwälzung dienen, innerhalb dieses Behälters angeordnet, so dass Wärmeverluste so weit wie möglich vermieden werden können. Die Fördereinrichtung umfasst Förderelemente zum Befördern des Materials von der zumindest einen Einlassöffnung zu der zumindest einen Auslassöffnung und Elemente, die sich durch Wirkung von Fliehkraft an der Innenseite der Wandung der Fördereinrichtung anlegen. Die sich unter Wirkung von Fliehkraft an der Innenseite der Wandung der Fördereinrichtung anlegenden Elemente können beispielsweise in Form von Lamellen ausgebildet sein. Die Förderelemente können Förderschaufeln umfassen bzw. in Form von Schaufelrädern ausgebildet sein, die mit solchen Lamellen und/oder zumindest einem beweglichen Einleger aus Gussmaterial versehen sind. Bei Drehen der Förderelemente legen sich die weiteren Elemente an der Innenseite der Wandung der Fördereinrichtung an und reinigen dabei die Innenseite der Wandung, so dass eine Verstopfung der Fördereinrichtung durch sich an der Innenseite von deren Außenwandung anlagerndes Material vermieden werden und der Wärmeübergang von der äußeren Einrichtung zum Wärmeeintrag in das durch die Fördereinrichtung strömende Material durch die Wandung der Fördereinrichtung hindurch in das dort hindurch geförderte Material optimal gehalten werden kann.

Als weiter vorteilhaft erweist es sich, wenn der Behälter im oberen Bereich trichterförmig zuläuft. Entstehende Gase können dadurch besser aus dem Behälter abgezogen werden. Insbesondere kann im oberen Bereich des Behälters oder in Verbindung mit diesem zumindest eine Kolonne zum Kondensieren und Abziehen von Destillat unterschiedlichen spezifischen Gewichts vorgesehen sein. Eine solche Kolonne kann beispielsweise als Glockenbodenkolonne ausgebildet sein. Mittels einer solchen Kolonne ist ein Trennen des Destillats nach seinem spezifischen Gewicht besonders gut möglich. Beispielsweise können hierüber Öl, Diesel und Benzin als schweres, mittelschweres und leichtes Destillat voneinander getrennt und einzeln aus der Vorrichtung bzw. der Kolonne abgezogen werden.

In der ersten Verdampfungsphase des Materials bildet sich Wasserdampf. Um die Explosionsgefahr zu vermindern, wird vorteilhaft eine Absaugeinrichtung im oberen Bereich des Behälters bzw. in Verbindung mit diesem vorgesehen, die den bei der Erwärmung des Materials entstehenden Dampf so lange abziehen kann, bis dieser eine Temperatur überschreitet, bei der sichergestellt ist, dass kein Wasserdampf mehr in dem Dampf enthalten ist. Beispielsweise kann bis zu einer Temperatur von etwa 105°C der Dampf über die Absaugeinrichtung abgesogen und in einer Kühleinrichtung kondensiert werden, so dass das dabei entstehende Wasser separat aus dem Behälter entfernt werden kann. Zum Herunterkühlen des in der ersten Stufe der Verdampfungsphase auftretenden Wasserdampfes kann beispielsweise ein Röhrenbündelkühler vorgesehen werden.

Durch das Einbringen des Materials in das Trägermedium hinein, nicht in den oberen Bereich des Behälters, also die Dampfzone, können die Kosten für eine zusätzliche Schleusungseinrichtung entfallen bzw. zumindest reduziert werden, die ansonsten zum Verhindern eines Eintrags von Luft bzw. insbesondere Sauerstoff in die Dampfzone verhindern soll. Vorteilhaft wird zum Zuführen des Materials ein Einführelement verwendet, das zum Einführen von festen und flüssigen Stoffen geeignet ist, wie beispielsweise ein Einfüllrohr. Endseitig kann dieses mit einer Zerkleinerungseinrichtung versehen sein, um das eingeführte Material nachzuzerkleinern. Hierfür kann beispielsweise ein mit einer endseitigen Scheibe versehenes Rührwerk verwendet werden mit einem geringen Gehäusespalt, so dass lediglich ausreichend zerkleinertes Material in das Trägermedium gelangen kann. Dieses Material vermischt sich mit dem Trägermedium, wobei dies durch Versetzen des Trägermediums mit dem Material zusammen in eine Drehbewegung unterstützt wird. Zusätzlich zu dem Rührwerk kann noch eine weitere Einrichtung zum Erzeugen der Durchmischung vorgesehen werden, die insbesondere zentral im Behälter angeordnet werden und Elemente aufweisen kann, die beispielsweise schaufelartig und/oder nach Art von Lamellen ausgebildet sind und ein Durchmischen von Trägermedium und Material bei einer Drehbewegung bewirken.

Zum Verhindern eines Festsetzens von Material am Boden des Behälters kann eine Einrichtung beispielsweise in Form eines drehbar gelagerten Bodenkratzers vorgesehen werden, der mit Abstand zum Boden des Behälters angeordnet wird. Beispielsweise kann der Bodenkratzer Flügelelemente aufweisen, die beabstandet zum Boden drehbar über eine Antriebseinheit, wie einen Motor, kontinuierlich angetrieben werden können.

Vorteilhaft kann ferner zumindest eine Fördereinrichtung, insbesondere ein Schneckenförderer, mit zumindest einer Einrichtung zur Feststofftrocknung vorgesehen sein, insbesondere eine Einlassöffnung der Fördereinrichtung im unteren Bereich des Behälters angeordnet sein. Hiermit können Feststoffe aus dem Bodenbereich des Behälters über die insbesondere schräg bezüglich der Hochachse des Behälters angeordnete Fördereinrichtung aus dem Bodenbereich des Behälters abgezogen werden, flüssige Bestandteile in den Behälter zurückfließen und ein verbleibender Ölkuchen erhitzt und der Fördereinrichtung in getrockneter Form entnommen werden. Es wird somit ein Feststoffseparator vorgesehen, mittels dessen ein Trennen von sich am Boden des Behälters absetzendem Feststoff und flüssigen Bestandteilen und ein Rückführen der flüssigen Bestandteile in das Behälterinnere möglich ist. Beispielsweise kann im Behälterboden eine Vertiefung oder Rinne vorgesehen sein, in der die Fördereinrichtung angeordnet wird, so dass diese in dem tiefsten Teil des Behälters angeordnet ist. Die Fördereinrichtung kann die sich dort absetzenden Feststoffe mitnehmen und über den schräg angeordneten Teil der Fördereinrichtung beispielsweise in Form eines Steigrohres mit inliegender Förderschnecke, aus dem Behälter heraus befördern. Die dem Feststoff anhängenden flüssigen Bestandteile können aufgrund des schräg zum Behälter angeordneten Teils der Fördereinrichtung durch diese zurück in den Behälter strömen. Der verbleibende Ölkuchen, also die von den flüssigen Bestandteilen im wesentlichen befreiten Feststoffe, können innerhalb der Fördereinrichtung erhitzt werden, so dass am Ende der Fördereinrichtung durch eine dort vorgesehene Austrittsöffnung ein trockener Rest- bzw. Feststoff austreten und entnommen werden kann. Das Material in der zum Verdampfen des Materials verwendeten Fördereinrichtung wird durch einen Induktionserwärmer erwärmt, wobei die Energie zum Kühlen des Induktors unter Verwendung eines Wärmetauschers zur Vorerwärmung des Materials verwendet werden kann bzw. wird. Hierdurch kann ein besonders hoher Wirkungsgrad erzielt werden, da die Energie, die zum Kühlen des Induktors verwendet werden soll, durch Vorsehen des Wärmetauschers gewonnen werden kann und somit die hierbei entstehende Wärme zum Vorerwärmen des in dem Trägermedium befindlichen Materials verwendet werden kann.

Diese Fördereinrichtung, mittels derer das Material zirkuliert und dabei so weit erhitzt werden soll, dass es verdampft, wird mit Abstand zum Behälterboden angeordnet, wobei insbesondere eine bezüglich des Behälters senkrechte Anordnung zum Behälterboden vorgesehen wird. Zwischen Behälterboden und Einlassöffnung der Fördereinrichtung kann der vorstehend bereits genannte Bodenkratzer angeordnet werden, um das Ansaugen von Material zu erleichtern und ein Zusetzen der Einlassöffnung aufgrund sich am Boden des Behälters anlagernden Materials so weit wie möglich zu vermeiden.

Zur Steigerung des Wirkungsgrades der Vorrichtung bzw. Anlage kann vorgesehen werden, das Materialgemisch, insbesondere zuzüglich eines zugegebenen Katalysators, bei Temperaturen von etwa 100 °C oder darüber, z.B. ca. 100-130 °C, in einen Druckbehälter zu befördern, insbesondere zu pumpen. Vorteilhaft kann das Materialgemisch eine vorbestimmbare Zeitspanne, z.B. ca. 30 min., unter einem vorgebbaren Druck von z.B. 30 bar in dem Druckbehälter verbleiben. Anschließend wird das Materialgemisch vorteilhaft zurück in den Behälter befördert, insbesondere gepumpt. Diese Maßnahme kann optional, je nach Zusammensetzung des Vormaterials, durchgeführt werden. Sie bewirkt eine bessere Entkettung der Kohlenwasserstoffe, ferner eine schnellere und effizientere Vermischung der eingegebenen Komponenten bzw. Materialkomponenten mit dem Katalysator. Das bedeutet auch eine größere Ausbeute an Fertigprodukten und weniger Anteil an Reststoffen.

Weiter vorteilhaft kann zumindest ein Zusatzstoff, insbesondere Katalysatormaterial, zum Binden von unerwünschten Depolymerisationsprodukten, insbesondere Halogen, Furanen, etc. in das Trägermedium-Material-Gemisch eingebracht werden. Hierdurch können Feststoffanteile gebunden und bezüglich des Behälters nach oben transportiert werden. Ein Abschöpfen dieser Feststoffanteile ist ebenso wie eine Wiederverwertung des Katalysators möglich, da dieser in dem Behälter verbleibt. Bei der katalytischen Depolymersation von beispielsweise Trafoöl oder PVChaltigen Kunststoffen entsteht Chlor, das beispielsweise mit gelöschtem Kalk gebunden werden kann. Durch das Einbringen von Zusatzstoffen ist ein Abscheiden dieser unerwünschten Depolymerisationsprodukte ohne SauerstoffEintrag in das System möglich.

Als besonders vorteilhaft erweist sich die erfindungsgemäße Vorrichtung sowie das erfindungsgemäße Verfahren auch dadurch, dass die Reststoffe nicht mehr nachbearbeitet werden müssen. Vielmehr können diese nach deren Trocknung entnommen werden. Nachdem insbesondere beim Unterdrucksetzen des entstehenden Dampfes der Produktanteil, der erhalten werden kann, höher ist als bei bekannten Vorrichtungen und Verfahren, und weniger Reststoffe entstehen, kann auch hierüber der Wirkungsgrad der Vorrichtung und des Verfahrens deutlich erhöht werden gegenüber den bekannten Vorrichtungen und Verfahren. Ferner erweist es sich als sehr vorteilhaft, dass alle für die katalytische Depolymerisation verwendeten Komponenten in ein und demselben Behälter angeordnet werden können und dort zusammen mit dem Trägermedium und den eingegebenen zu depolymerisierenden Materialien verbleiben können. Vorteilhaft tritt das zu depolymerisierende Material direkt in das Trägermedium im Innern des Behälters ein, also in den Flüssigkeitsbereich, so dass beim Einfüllen des Materials nicht ungewollt Dampf aus der vorteilhaft im Deckelbereich des Behälters angeordneten Dampfzone nach außen gelangen kann. Der Aufbau der Vorrichtung ist somit kompakt und es besteht weniger die Gefahr eines Eindringens von beispielsweise Sauerstoff in das System, der die Explosionsgefahr bei der Herstellung z.B. von Öl, Diesel und Benzin erhöhen würde.

Die zum Erwärmen des durch die Fördereinrichtung geförderten, zu depolymerisierenden Mediums verwendete auf Induktionsbasis arbeitende Einrichtung kann auch anderweitig zum Beheizen von Medium verwendet werden, wie beispielsweise zum Beheizen von Brauchwasser, hier also als Einrichtung zum Beheizen von Wasser als Medium. Erfindungsgemäß umfasst die Einrichtung hierbei einen Induktor bzw. zumindest eine Induktionseinrichtung und einen Mittelfrequenzgenerator. Die sonst auftretenden Wärmeverluste insbesondere bei Verwenden einer Gasheizung zum Beheizen von Brauchwasser können durch die Verwendung eines Wärmeeintrags durch Induktion unter Verwendung eines Mittelfrequenzgenerators deutlich vermindert werden. Hierbei wird ein vorzugsweise isolierter Behälter mit zumindest einem Heizkreisvorlaufanschluss und zumindest einem Heizkreisrücklaufanschluss und mit zumindest zwei Brauchwasseranschlüssen versehen. Zwischen den beiden Brauchwasseranschlüssen wird ein Heizrohr mit zumindest einer Brauchwassereinlassöffnung und zumindest einer Brauchwasserauslassöffnung angeordnet, das durch Induktion erwärmt wird unter Zuhilfenahme des Mittelfrequenzgenerators. Das durch das Heizrohr strömende Brauchwasser wird auf seinem Weg durch das Heizrohr durch Induktion erwärmt. In den Behälter ist, das Heizrohr umgebend, Wasser oder ein anderes Heizmedium aufgenommen, das in den Heizkreis eingespeist wird bzw. aus diesem kommt. Es kann zumindest ein Temperaturfühler vorgesehen sein, der die Wassertemperatur im Behälter misst und hierdurch ein Signal zum Ein- und auch zum Ausschalten des Mittelfrequenzgenerators zur Verfügung stellt bzw. durch dieses Signal der Mittelfrequenzgenerator ein- und ausgeschaltet wird.

Um ein besonders effektives und bedarfsgerechtes Nutzen der von der Induktionseinrichtung zur Verfügung gestellten Wärmenergie zu ermöglichen, können um die Induktionseinrichtung herum zumindest zwei ineinander angeordnete Rohre, insbesondere Kunststoffrohre, vorgesehen sein. Das zumindest eine innere Rohr kann ein Statorrohr und das zumindest eine äußere Rohr kann ein Rotorrohr sein. Beide Rohre können mit Öffnungen, insbesondere Schlitzen, in ihrem äußeren Mantel versehen sein. Die Mantelfläche des Rotorrohrs kann durch Verdrehen gegenüber dem Statorrohr geschlossen werden. Bei geschlossenen Mantelflächen beider Rohre geht die maximale Heizleistung in das Brauchwasser innerhalb des Heizrohres. Bei geöffneten Rohren und entsprechend Öffnungen bzw. Schlitzen in der Mantelfläche der Rohre kann der Wärmeübergang in das Brauchwasser abgesperrt werden, so dass die komplette Wärmeenergie in das Heizmedium bzw. den Heizwasserkreislauf geht. Anstelle des Vorsehens zumindest zweier gegeneinander verdrehbar gelagerter, mit Öffnungen im äußeren Mantel versehener Rohre kann auch eine verschließbare Lochblende oder eine andere in einer Position einen vollständigen Wärmeübergang in das Brauchwasser ermöglichende und in einer anderen Position diesen vollständig verhindernde Einrichtung vorgesehen werden.

Zum Kühlen der Induktionseinrichtung kann das Heizmedium im Behälter verwendet werden.

Beispielsweise können 300 I Wasser in dem Behälter vergleichsweise schnell und, im Unterschied zur Gasheizung, ohne Abgase auf 60 bis 70 °C erwärmt werden. Der Wirkungsgrad liegt bei mehr als 95 %, insbesondere entspricht der Wirkungsgrad bei Verwendung eines 10 kW-Mittelfrequenzgenerators etwa dem einer 18 kW-Gasheizung, so dass ein wirtschaftlicherer Betrieb einer Heizung unter Verwenden eines Mittelfrequenzgenerators anstelle beispielsweise von Gas als Mittel zum Erwärmen des Wassers möglich ist. Abgasrohre sind bei Verwenden von Induktionsenergie, die von einem Mittelfrequenzgenerator generiert wird, zum Erwärmen des Wassers, wie erwähnt, ebenfalls nicht mehr erforderlich, so dass auch der Aufbau der Heizeinrichtung im Vergleich zu einem Beheizen durch Gas einfacher wird.

Zur näheren Erläuterung der Erfindung wird im Folgenden ein Ausführungsbeispiel von dieser näher anhand der Zeichnung beschrieben. Diese zeigt in:
- Figur 1: eine Prinzipskizze als Querschnittsansicht einer ersten Ausführungsform einer erfindungsgemäßen Vorrichtung zur katalytischen Depolymerisation von Kohlenstoff enthaltendem Material unter Verwendung einer Induktionseinrichtung,
- Figur 2: eine Prinzipskizze eines Behälters mit einer erfindungsgemäßen Beheizung unter Verwendung einer Induktionseinrichtung, und
- Figur 3: eine Prinzipskizze eines Behälters mit erfindungsgemäßer Beheizung unter Verwendung einer Induktionseinrichtung, wobei eine Lochblendeneinrichtung um die Induktionseinrichtung herum angeordnet ist.

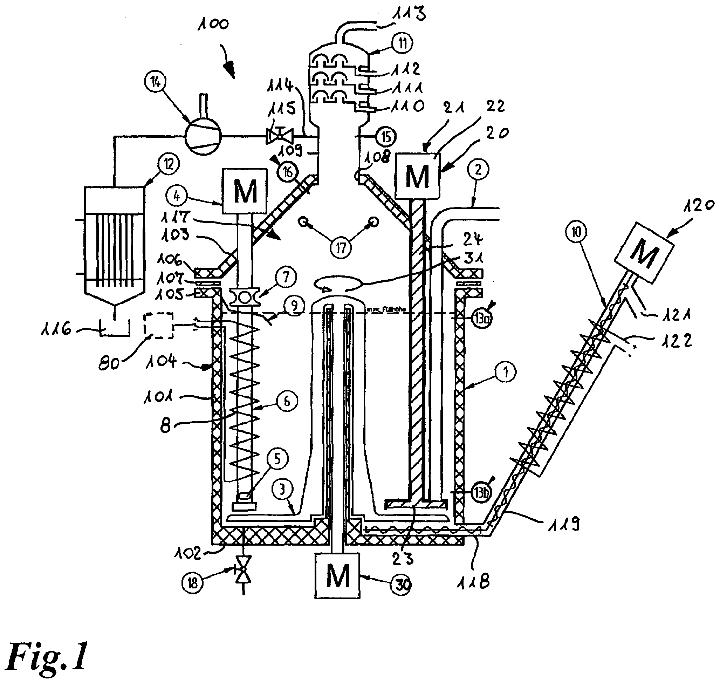

Figur 1 zeigt eine Ausführungsform einer Vorrichtung 100 zur katalytischen Depolymerisation, enthaltend einen Behälter 1, in dem die meisten der Komponenten der Vorrichtung 100 angeordnet sind. Hierdurch ist die Vorrichtung im Vergleich zu bekannten Vorrichtungen sehr kompakt aufgebaut und kann gut gegen Wärmeverluste geschützt werden. Dies erfolgt bei dem in Figur 1 gezeigten Behälter 1 dadurch, dass dieser im Bereich seiner Außenwandung 101, Bodenwandung 102 und seines Deckels 103 isoliert ist, insbesondere eine äußere Isolierschicht aufweist. Der Deckel 103 des Behälters 1 ist trichterförmig ausgebildet und kann mit dem restlichen Behälterkörper 104 über an sich bekannte Verbindungsmittel verbunden werden. Die Verbindung erfolgt in dem in Figur 1 gezeigten Bespiel im Bereich von Flanschen 105, 106 des Deckels 103 und des Behälterkörpers 104, wobei in diesem Bereich zum Abdichten des Behälterinneren gegenüber der Umgebung durch zumindest ein Dichtelement 107 vorgesehen werden kann.

Der trichterförmige Deckel 103 weist in seinem oberen Bereich eine zentrale bzw. mittige Öffnung 108 auf. Dort schließt sich ein Verbindungsrohr 109 an, das in einer Kolonne 11, hier einer Hochleistungsglockenbodenkolonne, endet. Diese weist drei seitliche Auslassöffnungen 110, 111, 112 in Höhe der jeweiligen Glockenböden sowie eine obere Auslassöffnung 113 auf. An das Verbindungsrohr 109 ist ferner im Bereich zwischen der Öffnung 108 und der Kolonne 11, unterhalb von dieser, eine Leitung 114 mit einer Absaugeinrichtung 14 angeschlossen, die über ein Ventil 115 verriegelt werden kann. Die Absaugeinrichtung 14, hier eine Vakuumabsaugung, steht in Verbindung mit einer Kühleinrichtung 12, hier in Form eines Röhrenbündelkühlers, zum Kondensieren von Wasserdampf. Zum Auffangen des entstehenden Kondenswassers ist ein Kondenswasserbehälter 116 vorgesehen.

Am Verbindungsrohr 109 ist ferner ein Temperaturfühler 15 etwa in Höhe des Abzweigs der Leitung 114 angeordnet. Dieser dient, wie weiter unten noch beschrieben werden wird, der Kontrolle der Temperatur des aufsteigenden Dampfes, um bei Überschreiten einer vorbestimmten Temperatur des Dampfes das Ventil 115 zu schließen und somit den Dampf nicht in die Leitung 114 zu saugen, sondern durch die Kolonne 11 strömen zu lassen.

Im Deckel 103 des Behälters sind noch weitere Öffnungen 17 vorgesehen, die zum Eindüsen von Gasen, insbesondere von Kohlendioxid dienen, um gezielt Reaktionen zumindest einzelner Bestandteile des sich bildenden Dampfes mit dem Gas herbeiführen zu können, bevor der Dampf weiter aufsteigt und diese Bestandteile aus dem Behälter austreten oder die Destillationsprodukte verunreinigen, die an den Auslassöffnungen 110, 111, 112 der Kolonne 11 entzogen werden können. Zum Detektieren aufsteigenden Dampfes ragt ein Gasdetektor 16 in das Innere des oberen Bereichs des Behälters hinein.

Durch den Deckel 103 des Behälters 1 ragen noch weitere Komponenten der Vorrichtung 100 hindurch, u.a. das Ende eines Einfüllrohres 2 und eines Antriebs 21 eines Rührwerks 20. Dieser Antrieb 21 umfasst einen Motor 22 und eine sich zu einer Zerkleinerungseinheit 23 des Rührwerks 20 etwa senkrecht erstreckende Antriebswelle 24. Die Antriebswelle 24 und das Einfüllrohr 2 erstrecken sich in diesem Ausführungsbeispiel benachbart und etwa parallel zueinander, wobei das Einfüllrohr 1 etwa in Höhe der Zerkleinerungseinheit 23 des Rührwerks endet, so dass Material, wie verschiedenste Arten von Reststoffen, z.B. Kunststoffe, Altöl, Zellulose, Klärschlamm etc., nachzerkleinert werden können, bevor sie in das Behälterinnere gelangen. Eine Steuerung der Zugabe von Material und dessen Größe kann über die Auslassöffnung erfolgen.

In den Behälter 1 wird vor dem Einbringen des katalytisch zu depolymerisierenden Materials ein Trägermedium eingebracht, wie beispielsweise Altöl mit einem Anteil von Hochtemperaturöl, insbesondere 20 % Hochtemperaturöl, um die entstehenden hohen Temperaturen gut ertragen zu können. Hierauf wird weiter unten im Rahmen der Beschreibung des Verfahrens zur katalytischen Depolymerisation noch eingegangen. Die Füllhöhen des Trägermediums mit bzw. ggf. auch ohne zu depolymerisierendem Material können durch Füllstandssensoren 13a, 13b überwacht werden. Der Füllstandssensor 13a dient zur Kontrolle eines möglichen Überschreitens der maximalen Füllhöhe, während der Füllstandssensor 13b der Kontrolle eines Unterschreitens der minimalen Füllstandshöhe dient.

Eine weitere sich durch den Deckel 103 des Behälters 1 hindurch erstreckende Einrichtung ist eine Fördereinrichtung 6 bzw. deren Antriebseinheit 4. Diese Fördereinrichtung 6 dient dem Ansaugen von Material aus dem unteren Bereich des Behälters 1, dem Befördern des Materials nach oben und dem Erwärmen des Materials hierbei, um dieses zu verdampfen. Zum Ansaugen des Materials ist im unteren Bereich der Fördereinrichtung 6 zumindest eine Ansaugöffnung 5 vorgesehen, zum Auslassen von Material ist im oberen Bereich der Fördereinrichtung 6 zumindest eine Auslassöffnung 7 oder ein Auslassring mit einer oder mehreren Öffnungen vorgesehen. Unterhalb des Auslassrings oder der Auslassöffnung(en) 7 ist ein Leit- bzw. Ablaufblech 9 vorgesehen, ggf. ein HF-Zyklon. Das erwärmte Material trifft nach dem Austritt aus der Auslassöffnung bzw. dem Auslassring auf das Leit- bzw. Ablaufblech 9 auf und läuft hierüber besonders gut und gezielt in das Trägermedium zurück. Zum Erwärmen ist außenseitig an der Fördereinrichtung 6 eine Einrichtung zum Wärmeeintrag, hier in Form eines Induktors 8 vorgesehen, wie eines Mittelfrequenzinduktors, der mit einem Mittelfrequenzgenerator 80 verbunden ist. Innerhalb des Förderrohrs der Fördereinrichtung sind Schaufelräder vorgesehen, die jeweils mit einem beweglichen Teil versehen sind, das sich beim Drehen aufgrund Fliehkraft an der Innenseite des Förderrohrs anlegen. Hierdurch kann die Innenseite des Förderrohrs ständig gereinigt werden. Die Fördereinrichtung kann beispielsweise eine Turbine mit einem MF-HF-Generator als Antrieb umfassen.

In der Bodenwandung 102 des Behälters ist ferner ein Ablassventil 18 vorgesehen, um insbesondere bei Überschreiten der maximalen Füllhöhe Trägermedium bzw. flüssige Bestandteile aus dem Behälter abziehen zu können.

Zum Vermeiden eines Festsetzens von Feststoffen ist im unteren Bereich des Behälters 1 ein Bodenkratzer 3 vorgesehen. Dieser ist mit einer Antriebseinheit 30 verbunden. Hierdurch kann der Bodenkratzer 3 drehangetrieben werden, was durch den Pfeil 31 in Figur 1 angedeutet ist.

Unterhalb des Bodenkratzers 3 ist in einem Bereich eine weitere Fördereinrichtung in Form eines Schneckenförderers 10 zum Abtransport von Feststoffen aus dem unteren Bereich des Behälters angeordnet, der sich mit einem ersten Teil 118 etwa parallel zur Bodenwandung 102 des Behälters erstreckt. Ein außerhalb des Behälters angeordneter zweiter Teil 119 erstreckt sich schräg, also winklig, von dem Behälterboden nach oben. Im oberen Endbereich ist endseitig eine Antriebseinheit 120 zum Antreiben der Fördereinrichtung 10 angeordnet. Ferner ist in diesem endseitigen Bereich der Fördereinrichtung eine Austrittsöffnung 121 vorgesehen, durch die Feststoffe entnommen werden können. Zum Trocknen der Feststoffe ist eine Einrichtung zum Wärmeeintrag 122 entlang des schräg angeordneten Teils 119 der Fördereinrichtung vorgesehen.

Bei dem Verfahren zum katalytischen Depolymerisieren von Materialien bzw. Reststoffen wird zunächst der Behälter mit einem Trägermedium, wie dem bereits erwähnten Altöl mit einem Anteil von z.B. 20 % Hochtemperaturöl befüllt. Beispielsweise wird er mit einer Menge von 1.500 I Trägermedium befüllt. Mittels der Füllstandssensoren 13a, 13b können ein Unterschreiten der minimalen Füllhöhe und ein Überschreiten der maximalen Füllhöhe überwacht werden. Anschließend werden in einem ersten Schritt die festen und/oder flüssigen Materialien bzw. Reststoffe in die Vorrichtung durch das Einfüllrohr 2 hindurch eingebracht. Die am unteren Ende des Rührwerks 20 angeordnete Zerkleinerungseinheit 23 insbesondere in Form einer Scheibe kann für eine Nachzerkleinerung des Materials sorgen. Hier ist beispielsweise ein kleiner Gehäusespalt vorgesehen, durch den das Material in das Behälterinnere und hier in das Trägermedium eintreten kann. Hierdurch wird sichergestellt, dass das neu in den Behälter eingebrachte Material immer in den Flüssigkeitsbereich eintritt und nicht beim Einfüllen des Materials ungewollt Dampf aus der im Deckel 103 des Behälters angeordneten Dampfzone 117 nach außen gelangen kann.

Die seitlich am Rührwerk 20 austretende nachzerkleinerte Masse wird durch dieses zusammen mit dem Trägermedium in eine Drehbewegung versetzt, so dass sich zumindest in dem bodennahen Bereich des Behälters 1 das Trägermedium und die Masse vermischen. Zusätzlich kann der mittels der Antriebseinheit 30, z.B. einem Getriebemotor, angetriebene Bodenkratzer 3 eine Drehbewegung des Trägermediums mit Material zum Mischen von diesen erzeugen.

Das untere Ende der Fördereinrichtung 6 bzw. Rohrturbine ist beispielsweise mit einem Abstand von etwa 100 mm von der Bodenwandung 102 entfernt angeordnet. Über die in diesem unteren Bereich der Fördereinrichtung 6 angeordnete Ansaugöffnung 5 wird das mit dem Trägermedium vermischte Material in das Innere der Fördereinrichtung eingesogen. Die in der Fördereinrichtung 6 angeordneten Förderschaufeln bzw. Schaufelräder werden durch die Antriebseinheit 4 bzw. deren Antriebswelle in eine Drehbewegung versetzt und befördern das angesogene Materialgemisch in der Fördereinrichtung nach oben. Wie bereits erwähnt, sind die Förderschaufeln bzw. die Schaufelräder mit beweglichen Einlegern oder Elementen versehen, die bei der Drehbewegung aufgrund auf sie einwirkender Fliehkräfte sich an die Innenseite der Rohrwandung der Fördereinrichtung 6 anlegen und dadurch ein Anhaften von Material dort verhindern. Die Fördereinrichtung 6 ist hierdurch selbstreinigend ausgebildet.

Das über die Länge der Fördereinrichtung 6 nach oben geförderte Materialgemisch tritt am oberen Ende durch die zumindest eine Auslassöffnung 7 bzw. den Auslassring wieder aus und gelangt in das Trägermedium zurück. Über die Förderstrecke hinweg wird das Material durch die Einrichtung 8 zum Wärmeeintrag bzw. den Induktor 8 erwärmt. Dieser Vorgang, also die Zirkulation des Materials, wird so lange wiederholt, bis das Material auf Verdampfungstemperatur gebracht ist. Aufgrund der Verwendung des Induktors 8 oder Induktionserwärmers in Verbindung mit dem Mittelfrequenzgenerator 80 kann ein hoher Wirkungsgrad erzielt werden. Hierbei kann die Energie, die zum Kühlen des Induktors benötigt wird, mittels eines Wärmetauschers gewonnen und die dabei entstehende Wärme zum Vorwärmen des Materials bzw. Reststoffs verwendet werden.

Der Dampf des verdampfenden Materials tritt in die Dampfzone 117 des Behälters 1 ein. In der ersten Stufe der Dampfphase ist dies lediglich Wasserdampf. Dieser wird über Öffnen des Ventils 115 und Betätigen der Ansaugeinrichtung 14 in die Kühleinrichtung 12 bzw. den Röhrenbündelkühler eingesogen und kondensiert dort. Das dabei entstehende destillierte Wasser wird in dem Kondenswasserbehälter 116 aufgefangen. Wasserdampf entsteht bei Temperaturen des Dampfes ab etwa 100 °C bis etwa 105 °C. Ab dieser Temperatur kann das Ventil 115 wieder geschlossen werden. Die Temperatur wird über den Temperaturfühler 15 gemessen.

Bei Dampftemperaturen von über 300 °C können in der Kolonne 11 die gewünschten Destillationsprodukte abgeschieden werden. Auf dem ersten Glockenboden sammelt sich daher schweres Destillat, wie Öl, auf dem zweiten Glockenboden mittelschweres Destillat, wie Diesel, und auf dem obersten Glockenboden leichtes Destillat, wie Benzin. Entsprechend kann Benzin durch die Auslassöffnung 112, Diesel durch die Auslassöffnung 111 und Öl durch die Auslassöffnung 110 entnommen werden.

Zur Steigerung des Wirkungsgrades der Vorrichtung kann das Materialgemisch zusammen mit dem zugegebenen Katalysator bei Temperaturen von z.B. ca. 100-130 °C durch das Ablassventil 18 in einen speziellen Druckbehälter gepumpt werden. Das Materialgemisch kann für ca. 30 min. unter einem Druck von 30 bar in dem Druckbehälter verbleiben. Anschließend wird das Materialgemisch zurück in den Behälter 1 gepumpt. Diese Maßnahme kann optional, je nach Zusammensetzung des Vormaterials, durchgeführt werden, um eine schnellere und effizientere Vermischung der eingegebenen Komponenten mit dem Katalysator, eine größere Ausbeute an dem zumindest einen Fertigprodukt und einen geringeren Anteil an Reststoffen vorzusehen.

Die sich am Boden absetzenden Feststoffe werden durch den Bodenkratzer 3 vom Boden gelöst und, sofern sie sich nicht mit dem Trägermedium vermengen, dem Schneckenförderer 10 zugeführt. Dieser dient als Feststoffseparator, wobei der erste Teil 118 des Schneckenförderers in einer Rinne in dem Behälterboden bzw. der Bodenwandung 102 angeordnet ist. Die Feststoffe werden in Richtung des zweiten schräg verlaufenden Teils 119 des Schneckenförderers 10 gefördert. Hierbei fließen flüssige Bestandteile wieder nach unten in den Behälter zurück. Der verbleibende Feststoffteil, auch als Ölkuchen bezeichnet, wird mittels der Einrichtung 122 zum Wärmeeintrag erhitzt, so dass am Ende des Schneckenförderers 10 durch die Austrittsöffnung 121 trockener Reststoff bzw. Feststoff entnommen werden kann. Bis zu dieser Entnahme bleiben sämtliche Feststoffe in dem Behälter, werden also normalerweise nicht auf anderem Wege aus diesem entfernt.

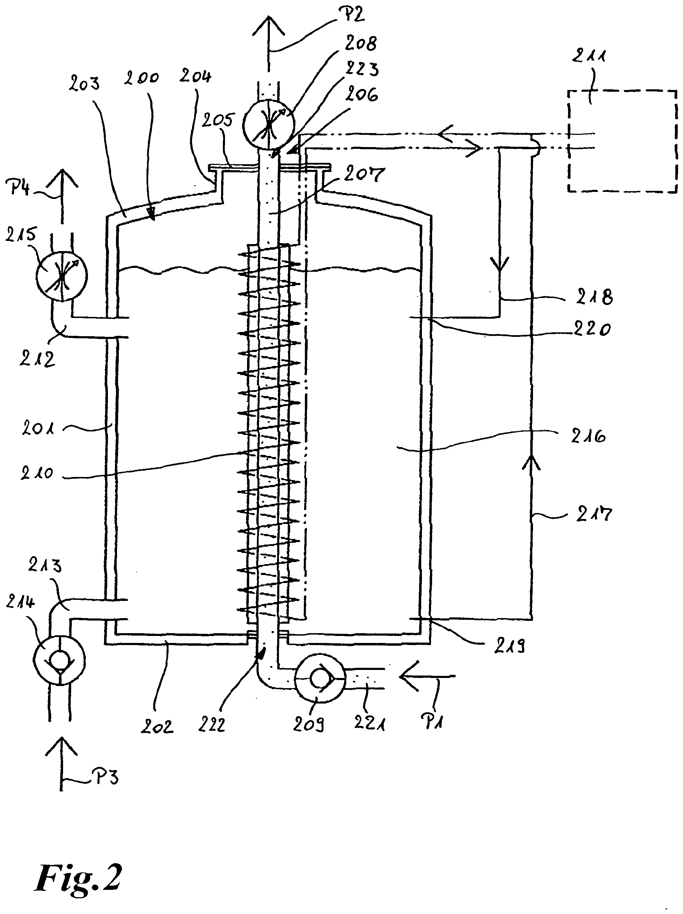

Figur 2 zeigt eine Prinzipskizze eines isolierten Behälters 200, der eine Mantelwandung 201 aufweist. Der Behälter 200 weist ferner eine Bodenwandung 202 und eine obere Deckelwandung 203 auf. Die Deckelwandung umfasst einen mittig oder zentral angeordneten Deckelstutzen 204, der von einem Flansch bzw. Befestigungsflansch 205 verschlossen ist. In dem Befestigungsflansch 205 bzw. durch diesen hindurch ist ein auslassseitiger Endabschnitt 206 eines Heizrohres 207 geführt, der eine Auslassöffnung 223 aufweist. Außerhalb des Behälters, somit auch außerhalb des Befestigungsflansches 205, ist ein Drosselventil 208 in dem Heizrohr 207 angeordnet. Das Heizrohr 207 ist ebenfalls durch die Bodenwandung 202 des Behälters 200 hindurchgeführt, weist dort eine Einlassöffnung 222 auf. Außerhalb des Behälters 200 ist das Heizrohr 207 mit einem Rückschlagventil 209 versehen. Durch das Heizrohr 207 hindurch wird Brauchwasser geleitet, das in die Einlassöffnung 222 in das Heizrohr 207 eintritt und durch die Auslassöffnung 223 aus diesem wieder austritt, wobei Brauchwasserzufuhr und -abfuhr die Pfeile P1 und P2 in Figur 2 angedeutet ist. Das Rückschlagventil 209 verhindert einen ungewollten Rückfluss in das Brauchwasserzuleitungsnetz und über das Drosselventil 208 kann die Durchflussmenge durch das Heizrohr 207, somit indirekt auch die Verweilzeit in diesem gesteuert oder geregelt werden.

Außenseitig wird das Heizrohr 207 von einer Einrichtung zum Wärmeeintrag in Form eines Induktors 210 umgeben. Der Induktor 210 ist mit einem Mittelfrequenzgenerator 211 verbunden, der außerhalb des Behälters 200 angeordnet ist, wie in Figur 2 ebenfalls angedeutet.

Der Behälter 200 weist ferner zwei Heizkreisanschlüsse 212, 213 auf, wobei der Heizkreisanschluss 212 mit einem Heizkreisvorlauf und der Heizkreisanschluss 213 mit einem Heizkreisrücklauf verbunden ist oder wird und wobei der Heizkreisanschluss 213, der mit dem Rücklauf verbunden ist, im unteren Abschnitt des Behälters 200 in Nähe der Bodenwandung 202 und der Heizkreisanschluss 212, der mit dem Vorlauf verbunden ist, im oberen Bereich des Behälters, also in der oberen Hälfte des Behälters 200, angeordnet ist. Im Bereich des Heizkreisanschlusses 213 ist ein Rückschlagventil 214 angeordnet und im Bereich des Heizkreisanschlusses 212 ein Drosselventil 215. Die Strömungsrichtung des durch den Heizkreis strömenden Mediums, das insbesondere Wasser 216 ist, ist durch die Pfeile P3 und P4 angedeutet. Es tritt am Heizkreisanschluss 213 in den Behälter 200 unten ein, strömt durch diesen nach oben und aus diesem im oberen Bereich des Behälters wieder durch den Heizkreisanschluss 212 heraus. Innerhalb des Behälters 200 ist dementsprechend das Medium, insbesondere Wasser 216, aufgenommen, das Heizrohr 207 mit außenseitigem Induktor 210 umgebend.

Das Wasser 216 bzw. Medium wird auch zum Kühlen des Induktors 216 verwendet, wobei durch einen Induktorkühlungsvorlauf 217 Wasser 216 aus dem unteren Bereich des Behälters, also dem Bereich über der Bodenwandung 202 des Behälters 200 entnommen und über einen Induktorkühlungsrücklauf 218 das zum Kühlen des Induktors 210 verwendete erwärmte Wasser 216 in den oberen Bereich, also die obere Hälfte, des Behälters 200 wieder zurückgeführt wird. Dies ist in Figur 2 ebenfalls angedeutet. Zur Entnahme und zum Zurückführen des in dem Behälter 200 befindlichen Wassers 216 bzw. Mediums sind jeweilige Anschlüsse 219, 220 vorgesehen sein, die mit dem Induktorkühlungsvorlauf 217 und dem Induktorkühlungsrücklauf 218 verbunden sind, wie in Figur 2 ebenfalls angedeutet.

Zum Erwärmen des in dem Behälter 200 enthaltenden Wassers 216, wobei der Behälter insoweit geschlossen ist als außer der Öffnungen zum Durchtritt des Heizrohres 207 und der Zuleitungen des Induktors 210 sowie der Anschlüsse 212, 213, 219, 220, die vorstehend genannt sind, keine weitere Öffnung in oder aus dem Behälter vorgesehen ist, wird Brauchwasser 221 durch das Heizrohr 207 hindurch geleitet und dabei durch Einwirken der durch den Induktor 210 eingebrachten Wärmeenergie erwärmt. Hierdurch kann Brauchwasser beispielsweise für den Verbrauch in einem Haushalt anstelle der Verwendung einer sonst üblichen Gasheizung erwärmt werden. Der Behälter 200 kann beispielsweise als Stahlbehälter ausgeführt sein, wobei sein Fassungsvermögen und dementsprechend seine Abmessungen auf den jeweiligen Anwendungsfall angepasst werden können. Das Brauchwasser 221 wird beim Hindurchleiten durch das außenseitig mit dem Induktor 210 versehene Heizrohr 207 erwärmt. Das Brauchwasser 221 strömt als frisches Brauchwasser am unteren Ende des Heizrohres 207 durch die dort vorgesehene Einlassöffnung 222 ein bzw. zuvor durch das Rückschlagventil 209 hindurch (Pfeil P1). Beim Aufsteigen in dem Heizrohr 207, also beim Durchströmen von diesem, wird das Brauchwasser erwärmt mittels der Induktionsenergie, die durch den Induktor in Verbindung mit dem Mittelfrequenzgenerator 211 zur Verfügung gestellt wird. Der Austritt aus dem Heizrohr 207 erfolgt durch die Auslassöffnung 223 und das Drosselventil 208 (Pfeil P2). Der Induktor 210 erstreckt sich über nahezu die gesamte Länge des Heizrohres, so dass über diese Länge als Heizstrecke eine Erwärmung des dort durch das Heizrohr hindurchströmenden Brauchwassers 221 möglich ist.

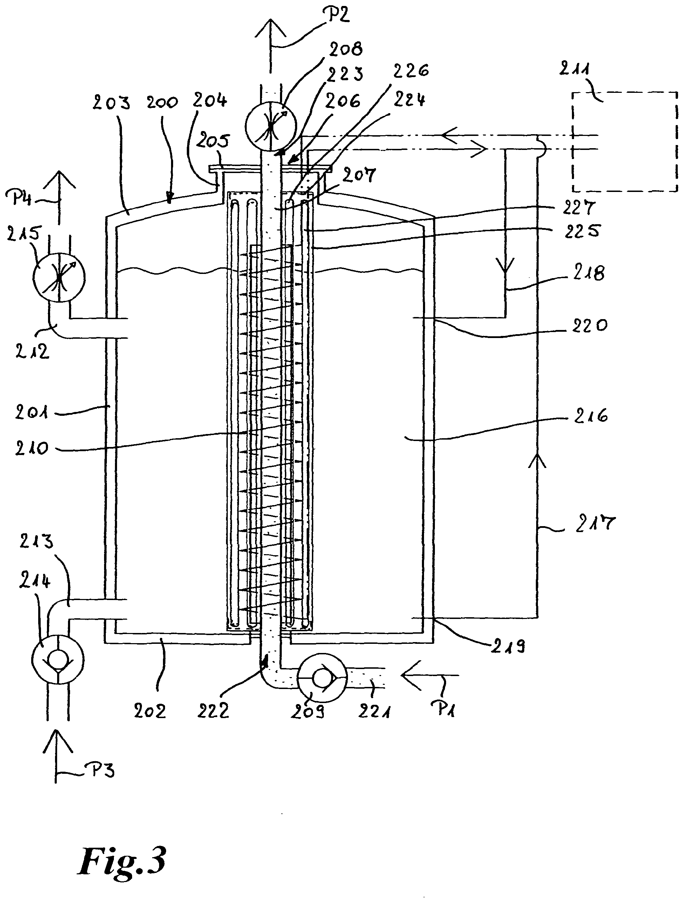

Um den Induktor 210 herum kann, wie in Figur 3 gezeigt, eine verschließbare Lochblendeneinrichtung, insbesondere in Form zweier ineinander angeordneter Rohre 224, 225 mit in deren Mantelfläche vorgesehenen Öffnungen 226, 227 oder Schlitzen vorgesehen werden, um eine noch effektivere Nutzung der durch den Induktor zur Verfügung gestellten Wärmeenergie zu ermöglichen. Das innere Rohr 224 wird als Statorrohr und das äußere Rohr 225 als Rotorrohr bezeichnet, wobei beide mit Öffnungen oder Schlitzen versehen sind. In Figur 3 ist hauptsächlich das äußere Rohr 225 zu sehen, das innere bzw. Statorrohr 224 liegt bezüglich seiner Öffnungen 226 deckungsgleich unter den Öffnungen 227 des äußeren bzw. Rotorrohres 225. Durch Verdrehen des Rotorrohres 225 gegenüber dem Statorrohr 224 können die Schlitze bzw. Öffnungen 226, 227 geschlossen werden. Nach dem Verschließen der in den beiden Rohren vorgesehenen Schlitze bzw. Öffnungen 226, 227 kann die maximale Heizleistung in das Brauchwasser 221 eingeleitet werden. Bei geöffneten Öffnungen 226, 227 bzw. Schlitzen kann der Wärmeübergang in das durch das Heizrohr 207 strömende Brauchwasser abgesperrt und die komplette Wärmeenergie, die von dem Induktor 210 zur Verfügung gestellt wird, in den Heizwasserkreislauf übergehen, also in das Wasser 216, das das Heizrohr 207 sowie die anderen beiden Rohre 224, 225 umgibt, übertragen werden.

Wie bereits erwähnt, folgt das Kühlen des Induktors durch Entnahme von Wasser 216 aus dem Behälter 200 über den Anschluss 219 in den Induktorkühlungsvorlauf 217. Das nach dem Kühlen des Induktors über den Induktorkühlungsrücklauf 218 rückgeführte Wasser 216 gelangt über den Anschluss 220 wiederum in das Innere des Behälters 200. Die Kühlleistung wird durch das Wasser 216 somit dem Induktor 210 direkt zugeführt, wobei keine zusätzlichen Kühleinrichtungen oder Kühlmedien vorgesehen zu werden brauchen.

Mit einer solchen Vorrichtung zum Erwärmen von Brauchwasser 221 in Form des mit den verschiedenen vorstehend genannten Komponenten versehenen Behälters kann somit einerseits eine sehr kompakte Vorrichtung zum Erwärmen von Brauchwasser geschaffen, zum anderen ein sehr hoher Wirkungsgrad von mehr als 95 % erzielt werden. Ferner treten keine Abgase auf, die bei Erwärmen von Brauchwasser über eine Gasheizung ansonsten unvermeidbar sind.

Neben den im Vorstehenden beschriebenen und in der Zeichnung gezeigten Ausführungsformen von Vorrichtungen und Verfahren zum katalytischen Depolymerisieren von Kohlenwasserstoff enthaltendem Material und Einrichtungen zum Beheizen von Medien können noch zahlreiche weitere gebildet werden, bei denen in dem Behälter zumindest eine Fördereinrichtung mit Einrichtung zum Wärmeeintrag in das Innere der Fördereinrichtung und mit zumindest einer Einlassöffnung und zumindest einer hiervon beabstandeten Auslassöffnung vorgesehen ist, wobei die Einlassöffnung im unteren Bereich des Behälters und die Auslassöffnung im oberen Bereich des Behälters angeordnet oder anordbar ist zum Zirkulieren und Erwärmen des Materials auf Verdampfungstemperatur.

### Bezugszeichenliste

- 1: Behälter
- 2: Einfüllrohr
- 3: Bodenkratzer
- 4: Antriebseinheit
- 5: Ansaugöffnung
- 6: Fördereinrichtung
- 7: Auslassöffnung/Auslassring
- 8: Induktor/Einrichtung zum Wärmeeintrag
- 9: Leit- bzw. Ablaufblech
- 10: Fördereinrichtung/Schneckenförderer
- 11: Kolonne
- 12: Kühleinrichtung
- 13a: erster Füllstandssensor für maximale Füllhöhe
- 13b: zweiter Füllstandssensor für minimale Füllhöhe
- 14: Absaugeinrichtung
- 15: Temperaturfühler
- 16: Gasdetektor
- 17: Öffnung
- 18: Ablassventil
- 20: Rührwerk
- 21: Antrieb
- 22: Motor
- 23: Zerkleinerungseinheit
- 24: Antriebswelle
- 30: Antriebseinheit
- 31: Pfeil
- 80: Mittelfrequenzgenerator
- 100: Vorrichtung
- 101: Außenwandung
- 102: Bodenwandung
- 103: Deckel
- 104: Behälterkörper
- 105: Flansch
- 106: Flansch
- 107: Dichtelement
- 108: mittige Öffnung
- 109: Verbindungsrohr
- 110: erste Auslassöffnung
- 111: zweite Auslassöffnung
- 112: dritte Auslassöffnung
- 113: obere Auslassöffnung
- 114: Leitung
- 115: Ventil
- 116: Kondenswasserbehälter
- 117: Dampfzone
- 118: parallel zum Boden des Behälters verlaufender erster Teil von 10
- 119: schräg verlaufender zweiter Teil von 10
- 120: Antriebseinheit
- 121: Austrittsöffnung
- 122: Einrichtung zum Wärmeeintrag
- 200: Behälter
- 201: isolierte Mantelwandung
- 202: Bodenwandung
- 203: Deckelwandung
- 204: Deckelstutzen
- 205: Befestigungsflansch
- 206: Endabschnitt
- 207: Heizrohr
- 208: Drosselventil
- 209: Rückschlagventil
- 210: Induktor
- 211: Mittelfrequenzgenerator
- 212: Heizkreisanschluss (Vorlauf)
- 213: Heizkreisanschluss (Rücklauf)
- 214: Rückschlagventil
- 215: Drosselventil
- 216: Wasser/Heizmedium
- 217: Induktorkühlungsvorlauf
- 218: Induktorkühlungsrücklauf
- 219: Anschluss
- 220: Anschluss
- 221: Brauchwasser
- 222: Einlassöffnung
- 223: Auslassöffnung
- 224: inneres Rohr/Statorrohr
- 225: äußeres Rohr/Rotorrohr
- 226: Öffnung/Schlitz in 224
- 227: Öffnung/Schlitz in 225
- P1: Pfeil
- P2: Pfeil
- P3: Pfeil
- P4: Pfeil

## Patentansprüche

1. Vorrichtung (100) zur katalytischen Depolymerisation von Kohlenwasserstoff enthaltendem Material, enthaltend zumindest einen mit dem Material befüllbaren Behälter (1),
**dadurch gekennzeichnet, dass**
in dem Behälter (1) zumindest eine Fördereinrichtung (6) mit Einrichtung (8) zum Wärmeeintrag in das Innere der Fördereinrichtung und mit zumindest einer Einlassöffnung (5) und zumindest einer hiervon beabstandeten Auslassöffnung (7) vorgesehen ist, wobei die Einlassöffnung (5) im unteren Bereich des Behälters (1) und die Auslassöffnung (7) im oberen Bereich des Behälters (1) angeordnet oder anordbar ist zum Zirkulieren und Erwärmen des Materials auf Verdampfungstemperatur, wobei die Fördereinrichtung (6) Förderelemente zum Befördern des Materials von der zumindest einen Einlassöffnung (5) zu der zumindest einen Auslassöffnung (7) und Elemente umfasst, die sich durch Wirkung von Fliehkraft an der Innenseite der Wandung der Fördereinrichtung anlegen und diese reinigen zum Optimalhalten des Wärmeübergangs von der Einrichtung (8) zum Wärmeeintrag in das durch die Fördereinrichtung (6) strömende Material durch die Wandung der Fördereinrichtung (6) hindurch in das dort hindurch geförderte Material, wobei die Einrichtung (8) zum Wärmeeintrag eine auf Induktionsbasis arbeitende Einrichtung ist.

2. Vorrichtung (100) nach Anspruch 1,
**dadurch gekennzeichnet, dass**
die Einrichtung (8) zum Wärmeeintrag einen Mittelfrequenzinduktor (80) umfasst.

3. Vorrichtung (100) nach Anspruch 1 oder 2,
**dadurch gekennzeichnet, dass**
die Förderelemente der Fördereinrichtung (6) Schaufelräder sind, die mit zumindest einem beweglichen Einleger aus Gussmaterial versehen sind.

4. Vorrichtung (100) nach einem der vorstehenden Ansprüche,
**dadurch gekennzeichnet, dass**
der Behälter (1) im oberen Bereich (103) trichterförmig zuläuft.

5. Vorrichtung (100) nach einem der vorstehenden Ansprüche,
**dadurch gekennzeichnet, dass**
der Behälter (1) ein mit zumindest einer wärmedämmenden Isolierschicht versehener Hochtemperaturbehälter ist.

6. Vorrichtung (100) nach einem der vorstehenden Ansprüche,
**dadurch gekennzeichnet, dass**
im oberen Bereich (117) des Behälters (1) oder in Verbindung mit diesem zumindest eine Kolonne (11) zum Kondensieren und Abziehen von Destillat unterschiedlichen spezifischen Gewichts vorgesehen ist.

7. Vorrichtung (100) nach einem der vorstehenden Ansprüche,
**dadurch gekennzeichnet, dass**
zumindest eine Fördereinrichtung, insbesondere ein Schneckenförderer (10), mit zumindest einer Einrichtung (122) zur Feststofftrocknung vorgesehen ist, insbesondere eine Einlassöffnung der Fördereinrichtung im unteren Bereich des Behälters (1) angeordnet ist.

8. Vorrichtung (100) nach einem der vorstehenden Ansprüche,
**dadurch gekennzeichnet, dass**
zumindest eine Einrichtung (3) zum Verhindern des Festsetzens von Material am Boden des Behälters (1) vorgesehen ist, insbesondere eine drehbare als Bodenkratzer (3) ausgebildete Einrichtung.

9. Verfahren zur katalytischen Depolymerisation von Kohlenwasserstoff enthaltendem Material unter Verwendung zumindest eines mit dem Material befüllbaren Behälters (1),
**dadurch gekennzeichnet, dass**
- zumindest ein Trägermedium in den Behälter (1) eingefüllt wird,
- das Material in das Trägermedium eingebracht wird,
- das Trägermedium mit dem Material in eine Drehbewegung versetzt wird,
- das Material durch eine Fördereinrichtung (6) mit Einrichtung (8) zum Wärmeeintrag hindurch zirkuliert und dabei so lange erwärmt wird, bis es auf Verdampfungstemperatur gebracht ist, wobei das Material in der Fördereinrichtung (6) durch einen Induktionserwärmer (8) erwärmt wird, und wobei die Fördereinrichtung (6) Förderelemente zum Befördern des Materials von der zumindest einen Einlassöffnung (5) zu der zumindest einen Auslassöffnung (7) und Elemente umfasst, die sich durch Wirkung von Fliehkraft an der Innenseite der Wandung der Fördereinrichtung anlegen und diese reinigen, um den Wärmeübergang von der Einrichtung (8) zum Wärmeeintrag in das durch die Fördereinrichtung (6) strömende Material durch die Wandung der Fördereinrichtung (6) hindurch in das dort hindurch geförderte Material optimal zu halten,
- der aufsteigende Dampf kondensiert und
- die Destillatbestandteile als Produkte abgeführt werden.

10. Verfahren nach Anspruch 9,
**dadurch gekennzeichnet, dass**
die Energie zum Kühlen des Induktionserwärmers unter Verwendung eines Wärmetauschers zur Vorerwärmung des Materials verwendet wird.

11. Verfahren nach Anspruch 9 oder 10,
**dadurch gekennzeichnet, dass**
das Materialgemisch, insbesondere zuzüglich einem zugegebenen Katalysator, bei Temperaturen von 100 °C oder darüber, insbesondere 100-130 °C, in einen Druckbehälter befördert, dort eine vorbestimmbare Zeitspanne, insbesondere 30 min., unter einem vorgebbaren Druck, insbesondere von 30 bar, in dem Druckbehälter verbleibt und nachfolgend in den Behälter zurückbefördert wird.

12. Verfahren nach einem der Ansprüche 9 bis 11,
**dadurch gekennzeichnet, dass**
Feststoffe aus dem Bodenbereich des Behälters (1) über eine schräg bezüglich des Behälters (1) angeordnete Fördereinrichtung (10,119) aus dem Bodenbereich (103) des Behälters (1) abgezogen werden, flüssige Bestandteile in den Behälter (1) zurückfließen und ein verbleibender Ölkuchen erhitzt und der Fördereinrichtung (10) entnommen wird.

13. Verfahren nach einem der Ansprüche 9 bis 12,
**dadurch gekennzeichnet, dass**
zumindest ein Zusatzstoff, insbesondere Katalysatormaterial, zum Binden von unerwünschten Depolymerisationsprodukten, insbesondere Halogenen, Furanen, in das Trägermedium-Material-Gemisch eingebracht wird.

## Claims

1. Device (100) for the catalytic depolymerisation of hydrocarbon-containing material, comprising at least one vessel (1) which can be filled with the material,
**characterised in that**
there is provided in the vessel (1) at least one conveying device (6) having a device (8) for heat input into the interior of the conveying device and having at least one inlet opening (5) and at least one outlet opening (7) spaced apart therefrom, wherein the inlet opening (5) is arranged or can be arranged in the lower region of the vessel (1) and the outlet opening (7) is arranged or can be arranged in the upper region of the vessel (1) for circulating and heating the material to evaporating temperature, wherein the conveying device (6) comprises conveying elements for conveying the material from the at least one inlet opening (5) to the at least one outlet opening (7) and comprises elements which bear against the inside of the wall of the conveying device due to the effect of centrifugal force and clean it, in order to keep optimal the heat transfer from the device (8) for heat input into the material flowing through the conveying device (6) through the wall of the conveying device (6) into the material conveyed through the conveying device (6), wherein the device (8) for heat input is a device which operates on the basis of induction.

2. Device (100) according to claim 1,
**characterised in that**
the device (8) for heat input comprises a medium-frequency inductor (8).

3. Device (100) according to claim 1 or 2,
**characterised in that**
the conveying elements of the conveying device (6) are paddle wheels which are provided with at least one movable feeder made of cast material.

4. Device (100) according to any one of the preceding claims,
**characterised in that**
the vessel (1) tapers in the manner of a funnel in the upper region (103).

5. Device (100) according to any one of the preceding claims,
**characterised in that**
the vessel (1) is a high-temperature vessel provided with at least one heat-insulating insulation layer.

6. Device (100) according to any one of the preceding claims,
**characterised in that**
in the upper region (117) of the vessel (1) or connected thereto there is provided at least one column (11) for condensing and removing distillate of different specific weight.

7. Device (100) according to any one of the preceding claims,
**characterised in that**
at least one conveying device, in particular a screw conveyor (10), having at least one device (122) for solids drying is provided, in particular an inlet opening of the conveying device is arranged in the lower region of the vessel (1).

8. Device (100) according to any one of the preceding claims,
**characterised in that**
at least one device (3) for preventing material from settling at the bottom of the vessel (1), in particular a rotatable device in the form of a bottom scraper (3), is provided.

9. Method for the catalytic depolymerisation of hydrocarbon-containing material using at least one vessel (1) which can be filled with the material,
**characterised in that**
- at least one carrier medium is introduced into the vessel (1),
- the material is introduced into the carrier medium,
- the carrier medium containing the material is set in rotary motion,
- the material is circulated through a conveying device (6) having a device (8) for heat input and is thereby heated until it has reached evaporating temperature, wherein the material in the conveying device (6) is heated by an induction heater (8), and wherein the conveying device (6) comprises conveying elements for conveying the material from the at least one inlet opening (5) to the at least one outlet opening (7) and comprises elements which bear against the inside of the wall of the conveying device due to the effect of centrifugal force and clean it, in order to keep optimal the heat transfer from the device (8) for heat input into the material flowing through the conveying device (6) through the wall of the conveying device (6) into the material conveyed through the conveying device,
- the rising vapour condenses, and
- the distillate constituents are discharged as products.

10. Method according to claim 9,
**characterised in that**
the energy for cooling the induction heater using a heat exchanger is used for pre-heating the material.

11. Method according to claim 9 or 10,
**characterised in that**
the material mixture, in particular plus an added catalyst, is conveyed at temperatures of 100°C or above, in particular from 100 to 130°C, into a pressure vessel, remains in the pressure vessel for a predeterminable period of time, in particular 30 minutes, under a specifiable pressure, in particular of 30 bar, and is subsequently conveyed back into the vessel.

12. Method according to any one of claims 9 to 11,
**characterised in that**
solids from the bottom region of the vessel (1) are removed from the bottom region (103) of the vessel (1) *via* a conveying device (10, 119) arranged at an angle relative to the vessel (1), liquid constituents flow back into the vessel (1), and an oil cake that remains is heated and removed from the conveying device (10).

13. Method according to any one of claims 9 to 12,
**characterised in that**
at least one additive, in particular catalyst material, for binding undesirable depolymerisation products, in particular halogens, furans, is introduced into the carrier medium/material mixture.

## Revendications

1. Dispositif (100) de dépolymérisation catalytique d'une matière contenant un hydrocarbure, contenant au moins un récipient (1) pouvant être rempli avec la matière,
**caractérisé en ce que**
au moins un dispositif de transport (6) avec dispositif (8) d'apport de chaleur à l'intérieur du dispositif de transport et avec au moins une ouverture d'entrée (5) et au moins une ouverture de sortie (7) espacée de celle-ci est prévu dans le récipient (1), dans lequel l'ouverture d'entrée (5) est agencée ou peut être agencée dans la zone inférieure du récipient (1) et l'ouverture de sortie (7) dans la zone supérieure du récipient (1) pour la circulation et le chauffage de la matière à la température d'évaporation, dans lequel le dispositif de transport (6) comprend des éléments de transport pour transporter la matière de l'au moins une ouverture d'entrée (5) à l'au moins une ouverture de sortie (7) et des éléments, qui s'appliquent contre la face intérieure de la paroi du dispositif de transport par effet de la force centrifuge et la nettoient pour maintenir de manière optimale le transfert de chaleur du dispositif (8) d'apport de chaleur à la matière passant par le dispositif de transport (6) à travers la paroi du dispositif de transport (6) à la matière qui y est transportée à travers, dans lequel le dispositif (8) d'apport de chaleur est un dispositif fonctionnant par induction.

2. Dispositif (100) selon la revendication 1,
**caractérisé en ce que**
le dispositif (8) d'apport de chaleur comprend un inducteur de fréquence moyenne (80).

3. Dispositif (100) selon la revendication 1 ou 2,
**caractérisé en ce que**
les éléments de transport du dispositif de transport (6) sont des roues à aubes, qui sont dotées d'au moins un insert mobile en fonte.

4. Dispositif (100) selon l'une quelconque des revendications précédentes,
**caractérisé en ce que**
le récipient (1) se termine en forme d'entonnoir dans la zone supérieure (103).

5. Dispositif (100) selon l'une quelconque des revendications précédentes,
**caractérisé en ce que**
le récipient (1) est un récipient haute température doté d'au moins une couche isolante à isolation thermique.

6. Dispositif (100) selon l'une quelconque des revendications précédentes,
**caractérisé en ce que**
dans la zone supérieure (117) du récipient (1) ou en liaison avec celle-ci, au moins une colonne (11) est prévue pour la condensation et le retrait de distillat de poids spécifique différent.

7. Dispositif (100) selon l'une quelconque des revendications précédentes,
**caractérisé en ce que**
au moins un dispositif de transport, en particulier un convoyeur à vis (10), avec au moins un dispositif (122) de séchage de solides est prévu, en particulier une ouverture d'entrée du dispositif de transport est agencée dans la zone inférieure du récipient (1).

8. Dispositif (100) selon l'une quelconque des revendications précédentes,
**caractérisé en ce que**
au moins un dispositif (3) empêchant la fixation de matière au fond du récipient (1) est prévu, en particulier un dispositif rotatif réalisé en tant que racloir de fond (3).

9. Procédé de dépolymérisation catalytique d'une matière contenant un hydrocarbure en utilisant au moins un récipient (1) pouvant être rempli avec la matière,
**caractérisé en ce que**
- au moins un fluide porteur est rempli dans le récipient (1),
- la matière est introduite dans le fluide porteur,
- le fluide porteur avec la matière est mis en rotation,
- la matière circule à travers un dispositif de transport (6) avec dispositif (8) d'apport de chaleur et est chauffée jusqu'à ce qu'elle soit amenée à la température d'évaporation, dans lequel la matière est chauffée dans le dispositif de transport (6) par un dispositif de chauffage par induction (8), et dans lequel le dispositif de transport (6) comprend des éléments de transport pour transporter la matière de l'au moins une ouverture d'entrée (5) à l'au moins une ouverture de sortie (7) et des éléments, qui s'appliquent contre la face intérieure de la paroi du dispositif de transport par effet de la force centrifuge et la nettoient pour maintenir de manière optimale le transfert de chaleur du dispositif (8) d'apport de chaleur à la matière passant par le dispositif de transport (6) à travers la paroi du dispositif de transport (6) à la matière qui y est transportée à travers,
- la vapeur ascendante est condensée et
- les composants du distillat sont évacués en tant que produits.

10. Procédé selon la revendication 9,
**caractérisé en ce que**
l'énergie pour le refroidissement du dispositif de chauffage par induction est utilisée pour le préchauffage de la matière en utilisant un échangeur de chaleur.

11. Procédé selon la revendication 9 ou 10,
**caractérisé en ce que**
le mélange de matière, en particulier en plus d'un catalyseur ajouté, est transporté à des températures de 100 °C ou plus, en particulier 100-130 °C, dans un récipient sous pression, y reste dans le récipient sous pression pendant une période de temps pouvant être prédéterminée, en particulier 30 min, à une pression pouvant être prédéterminée, en particulier de 30 bar, et est ensuite ramené au récipient.

12. Procédé selon l'une quelconque des revendications 9 à 11,
**caractérisé en ce que**
des solides de la zone de fond du récipient (1) sont retirés de la zone de fond (103) du récipient (1) par le biais d'un dispositif de transport (10, 119) agencé en biais par rapport au récipient (1), des composants fluides retournent dans le récipient (1) et un tourteau restant est chauffé et retiré du dispositif de transport (10).

13. Procédé selon l'une quelconque des revendications 9 à 12,
**caractérisé en ce que**
au moins un additif, en particulier une matière de catalyseur, pour la fixation de produits de dépolymérisation indésirables, en particulier halogènes, furanes, est introduit dans le mélange fluide porteur-matière.
